# EUROPEAN PATENT APPLICATION

(11) **EP 4 610 105 A1**
(43) Date of publication of application: **03.09.2025**
(21) Application number: 25159546.8
(22) Date of filing: 24.02.2025
(51) Int. Cl.: B60P 3/079, B60P 7/08, B60P 3/073

(54) **WORK VEHICLE**

(30) Priority: 26.02.2024 US 202418587573
(71) Applicant: Kubota Corporation, Osaka-shi, Osaka 556-8601 (JP)
(72) Inventor: BOSTAN, Alexandru, GAINESVILLE, GA, 30507 (US)
(74) Representative: Cabinet Beau de Loménie

(57) **Abstract**

A bracket assembly (88, 128) for a work vehicle (10) includes: a bracket body (90, 130) defining a first mounting aperture (94, 132), a second mounting aperture (96, 134), and a connecting aperture (98, 136); and an attachment fastener (83, 146) configured to secure the bracket body to the work vehicle. The first mounting aperture (94, 132) is configured to receive a first end of the attachment fastener (83, 146) therein and the second mounting aperture (96, 134) is configured to receive a second end of the attachment fastener (83, 146) therein. The attachment fastener (83, 146) extends from the first mounting aperture (94, 132) to the second mounting aperture (96, 134) to define a mounting space with the bracket body (90, 130), the mounting space being configured to fit about a bracket mounting portion of the work vehicle (10), thereby securing the bracket assembly (88, 128) to the work vehicle (10). The connecting aperture (98, 136) is configured to engage with a connecting apparatus.

## Description

### BACKGROUND OF THE INVENTION

### Field of the Invention

The present disclosure relates to a work vehicle including a body, a power source, and a front-wheel unit at a front portion of the body having a forward bracket assembly, and a rear bracket assembly at a rear portion of the body.

### Description of Related Art

A known work machine is the work machine disclosed in JP 2016-124427 A. The work machine includes a body, an engine at a back portion of the body, a driver's seat at the center of the body, and a front-wheel unit at a front portion of the body. Work machines such as the one disclosed in the above-referenced application, may be transported on the carrier box of a track or a trailer (hereinafter referred to as "carrier box or the like") if, for instance, the storage place and the work place are far from each other. Work machines are, in that case, desirably fixed to the carrier box or the like with use of ropes, chains, or other connecting apparatuses.

### SUMMARY OF THE INVENTION

A bracket assembly for a work vehicle configured for securing the work vehicle to an anchor structure via a connecting apparatus may include: a bracket body defining a first mounting aperture, a second mounting aperture, and a connecting aperture; and an attachment fastener configured to secure the bracket body to the vehicle. The first mounting aperture may be configured to receive a first end of the attachment fastener therein and the second mounting aperture is configured to receive a second end of the attachment fastener therein. The attachment fastener may extend from the first mounting aperture to the second mounting aperture to define a mounting space with the bracket body, the mounting space being configured to fit about a bracket mounting portion of the work vehicle, thereby securing the bracket assembly to the work vehicle. The connecting aperture may be configured to engage with the connecting apparatus.

The bracket body may further define an alignment aperture configured to receive a wheel post of the work vehicle therein. The alignment aperture may be configured to share an axis with the wheel post. The alignment aperture may be disposed at least partially forward of the first mounting aperture, the second mounting aperture, and the connecting aperture relative to the work vehicle. The attachment fastener may be U-shaped and extend around the bracket mounting portion of the work vehicle. The attachment fastener may further include a first locking nut and a second locking nut, the first locking nut and the second locking nut being configured to secure, respectively, the first end and the second end of the attachment fastener to the bracket body. The first mounting aperture may be disposed inward of the second mounting aperture and the connecting aperture relative to the work vehicle. The connecting apparatus may be a rope, a strap, or a chain configured to be received within the connecting aperture and tied to the bracket body. The connecting aperture may be disposed outside of the first mounting aperture and the second mounting aperture relative to the work vehicle.

A tie-down bracket system for securing a work vehicle to an anchor structure may include: at least one forward bracket that may include: a forward bracket body defining a first forward mounting aperture, a second forward mounting aperture, and a forward connecting aperture; and a forward attachment fastener configured to secure the forward bracket body to the work vehicle; and at least one rear bracket assembly that may include: a rear bracket body defining at least one rear mounting aperture and at least one rear connecting aperture; and at least one rear attachment fastener configured to be received within the at least one rear mounting aperture to secure the rear bracket body to the work vehicle. The first forward mounting aperture may be configured to receive a first end of the forward attachment fastener therein and the second forward mounting aperture is configured to receive a second end of the forward attachment fastener therein. The forward attachment fastener may extend from the first forward mounting aperture to the second forward mounting aperture to define a mounting space with the forward bracket body, the mounting space being configured to fit about a bracket mounting portion of the work vehicle, thereby securing the at least one forward bracket assembly to the work vehicle. The at least one forward connecting aperture may be configured to engage with the at least one first connecting apparatus, and the at least one rear connecting aperture may be configured to engage with at least one second connecting apparatus.

The at least one forward bracket body may further define an alignment aperture configured to receive a wheel post of the work vehicle therein. The forward connecting aperture may be disposed outside of the first mounting aperture and the second mounting aperture relative to the work vehicle. The at least one first connecting apparatus may be a rope, a strap, or a chain configured to be received within the forward connecting aperture and tied to the forward bracket body. The at least one forward bracket assembly may include a plurality of forward bracket assemblies corresponding to a number of forward wheels on the work vehicle, and the at least one first connecting apparatus may include a plurality of connecting apparatuses corresponding to the plurality of forward bracket assemblies. The at least one rear mounting aperture may be configured to be aligned with at least one cut-out defined in the work vehicle, and the at least one rear mounting aperture and the at least one cut-out may be configured to receive the at least one rear attachment fastener therethrough to secure the at least one rear bracket to the work vehicle. The at least one second connecting apparatus may be a rope, a strap or a chain configured to be received within the at least one rear connecting aperture and tied to the rear bracket body. The at least one rear connecting aperture may include a first rear connecting aperture and a second rear connecting aperture, and the at least one second connecting apparatus may include a first rope and a second rope configured to be received within, respectively, the first rear connecting aperture and the second rear connecting aperture and tied to the rear bracket body.

A work vehicle may include: a body; a right wheel assembly connected to the body; a left wheel assembly connected to the body; a first forward bracket assembly detachably mounted to the right wheel assembly; and a second forward bracket assembly detachably mounted to the left wheel assembly. The right and left wheel assemblies may each include: a leg extending from the body; a post extending from the leg; and a wheel operatively connected to the post. The first and second forward bracket assemblies may each include: a forward bracket body defining a first forward mounting aperture, a second forward mounting aperture, and a forward connecting aperture; and a forward attachment fastener having a first end and a second end. The first forward mounting apertures may be configured to receive the first ends of the forward attachment fasteners therein and the second forward mounting apertures are configured to receive the second ends of the forward attachment fasteners therein. The forward attachment fasteners may be configured to extend from the first mounting apertures around the legs of the right and left wheel assemblies to the second mounting apertures, thereby mounting the first and second forward bracket assemblies to the right and left wheel assemblies. The forward connecting apertures may be configured to receive at least one first connecting apparatus therethough to connect the at least one first connecting apparatus to the forward bracket bodies.

In some embodiments or aspects, the present disclosure may be characterized by one or more of the following numbered clauses:
Clause 1. A bracket assembly for a work vehicle configured for securing the work vehicle to an anchor structure via a connecting apparatus, the bracket assembly comprising: a bracket body defining a first mounting aperture, a second mounting aperture, and a connecting aperture; and an attachment fastener configured to secure the bracket body to the vehicle, wherein the first mounting aperture is configured to receive a first end of the attachment fastener therein and the second mounting aperture is configured to receive a second end of the attachment fastener therein, wherein the attachment fastener extends from the first mounting aperture to the second mounting aperture to define a mounting space with the bracket body, the mounting space being configured to fit about a bracket mounting portion of the work vehicle, thereby securing the bracket assembly to the work vehicle, and wherein the connecting aperture is configured to engage with the connecting apparatus.
Clause 2. The bracket assembly of clause 1, wherein the bracket body further defines an alignment aperture configured to receive a wheel post of the work vehicle therein.
Clause 3. The bracket assembly of clause 2, wherein the alignment aperture is configured to share an axis with the wheel post.
Clause 4. The bracket assembly of clauses 2 or 3, wherein the alignment aperture is disposed at least partially forward of the first mounting aperture, the second mounting aperture, and the connecting aperture relative to the work vehicle.
Clause 5. The bracket assembly of any of clauses 1-4, wherein the attachment fastener is U-shaped and extends around the bracket mounting portion of the work vehicle.
Clause 6. The bracket assembly of any of clauses 1-5, wherein the attachment fastener further comprises a first locking nut and a second locking nut, the first locking nut and the second locking nut being configured to secure, respectively, the first end and the second end of the attachment fastener to the bracket body.
Clause 7. The bracket assembly of any of clauses 1-6, wherein the first mounting aperture is disposed inward of the second mounting aperture and the connecting aperture relative to the work vehicle.
Clause 8. The bracket assembly of any of clauses 1-7, wherein the connecting apparatus is a rope, a strap, or a chain configured to be received within the connecting aperture and tied to the bracket body.
Clause 9. The bracket assembly of any of clauses 1-8, wherein the connecting aperture is disposed outside of the first mounting aperture and the second mounting aperture relative to the work vehicle.
Clause 10. A tie-down bracket system for securing a work vehicle to an anchor structure, the tie-down bracket system comprising: at least one forward bracket assembly comprising: a forward bracket body defining a first forward mounting aperture, a second forward mounting aperture, and a forward connecting aperture; and a forward attachment fastener configured to secure the forward bracket body to the work vehicle; and at least one rear bracket assembly comprising: a rear bracket body defining at least one rear mounting aperture and at least one rear connecting aperture; and at least one rear attachment fastener configured to be received within the at least one rear mounting aperture to secure the rear bracket body to the work vehicle, wherein the first forward mounting aperture is configured to receive a first end of the forward attachment fastener therein and the second forward mounting aperture is configured to receive a second end of the forward attachment fastener therein, wherein the forward attachment fastener extends from the first forward mounting aperture to the second forward mounting aperture to define a mounting space with the forward bracket body, the mounting space being configured to fit about a bracket mounting portion of the work vehicle, thereby securing the at least one forward bracket assembly to the work vehicle, wherein the at least one forward connecting aperture is configured to engage with at least one first connecting apparatus, and wherein the at least one rear connecting aperture is configured to engage with at least one second connecting apparatus.
Clause 11. The tie-down bracket system of clause 10, wherein the at least one forward bracket body further defines an alignment aperture configured to receive a wheel post of the work vehicle therein.
Clause 12. The tie-down bracket system of clause 10 or 11, wherein the forward connecting aperture is disposed outside of the first mounting aperture and the second mounting aperture relative to the work vehicle.
Clause 13. The tie-down bracket system of any of clauses 10-12, wherein the at least one first connecting apparatus is a rope, a strap, or a chain configured to be received within the forward connecting aperture and tied to the forward bracket body.
Clause 14. The tie-down bracket system of clause 13, wherein the at least one forward bracket assembly comprises a plurality of forward bracket assemblies corresponding to a number of forward wheels on the work vehicle, and wherein the at least one first connecting apparatus comprises a plurality of connecting apparatuses corresponding to the plurality of forward bracket assemblies.
Clause 15. The tie-down bracket system of any of clauses 10-14, wherein the at least one rear mounting aperture is configured to be aligned with at least one cut-out defined in the work vehicle, the at least one rear mounting aperture and the at least one cut-out being configured to receive the at least one rear attachment fastener therethrough to secure the at least one rear bracket to the work vehicle.
Clause 16. The tie-down bracket system of any of clauses 10-15, wherein the at least one second connecting apparatus is a rope, a strap, or a chain configured to be received within the at least one rear connecting aperture and tied to the rear bracket body.
Clause 17. The tie-down bracket system of clause 16, wherein the at least one rear connecting aperture comprises a first rear connecting aperture and a second rear connecting aperture, and wherein the at least one second connecting apparatus comprises a first rope and a second rope configured to be received within, respectively, the first rear connecting aperture and the second rear connecting aperture and tied to the rear bracket body.
Clause 18. A work vehicle comprising: a body; a right wheel assembly connected to the body; a left wheel assembly connected to the body; a first forward bracket assembly detachably mounted to the right wheel assembly; and a second forward bracket assembly detachably mounted to the left wheel assembly, wherein the right and left wheel assemblies each comprise: a leg extending from the body; a post extending from the leg; and a wheel operatively connected to the post, wherein the first and second forward bracket assemblies each comprise: a forward bracket body defining a first forward mounting aperture, a second forward mounting aperture, and a forward connecting aperture; and a forward attachment fastener having a first end and a second end, wherein the first forward mounting apertures are configured to receive the first ends of the forward attachment fasteners therein and the second forward mounting apertures are configured to receive the second ends of the forward attachment fasteners therein, wherein the forward attachment fasteners are configured to extend from the first mounting apertures around the legs of the right and left wheel assemblies to the second mounting apertures, thereby mounting the first and second forward bracket assemblies to the right and left wheel assemblies, and wherein the forward connecting apertures are configured to receive at least one first connecting apparatus therethough to connect the at least one first connecting apparatus to the forward bracket bodies.
Clause 19. The work vehicle of clause 18, wherein the forward bracket bodies of the first and second bracket assemblies both further define a forward alignment apparatus, wherein the alignment apparatuses are configured to receive the posts of the right and left wheel assemblies therein.
Clause 20. The work vehicle of clause 18 or 19, a rear bracket assembly detachably mounted to the body, the rear bracket assembly comprising: a rear bracket body defining a first rear mounting aperture, a second rear mounting aperture, and at least one rear connecting aperture; a first rear attachment fastener; and a second rear attachment fastener, wherein the first rear mounting aperture and the second rear mounting aperture are configured to be aligned with, respectively, a first vehicle mounting aperture and a second vehicle mounting aperture defined in the body of the work vehicle, wherein the first rear mounting aperture and the first vehicle mounting aperture are configured to receive the first rear attachment fastener therethrough, and the second rear mounting aperture and the second vehicle mounting aperture are configured to receive the second rear attachment fastener therethrough, thereby mounting the rear bracket assembly to the body, and wherein the at least one rear connecting aperture is configured to receive at least one second connecting apparatus therethrough, thereby securing the at least one second connecting apparatus to the rear bracket body.

### BRIEF DESCRIPTION OF THE DRAWING(S)

FIG. 1 is a perspective view of a work vehicle according to one embodiment or aspect of the present disclosure;
FIG. 2 is a side view of the work vehicle of FIG. 1 on a platform of a tractor according to one embodiment or aspect of the present disclosure;
FIG. 3 plan view of the work vehicle of FIG. 2;
FIG. 4 is a front view of the work vehicle of FIG. 2;
FIG. 5 is a rear view of the work vehicle of FIG. 2;
FIG. 6 is a perspective view of the frame of the work vehicle of FIG. 1 according to one embodiment or aspect of the present disclosure;
FIG. 7 is a bottom view of the frame of FIG. 5;
FIG. 8 is a perspective view of a wheel assembly and a forward bracket assembly of the work vehicle of FIG. 1 according to one embodiment or aspect of the present disclosure;
FIG. 9 is a plan view of the wheel assembly and forward bracket assembly of FIG. 7;
FIG. 10 is an exploded view of the wheel assembly and forward bracket assembly of FIG. 7;
FIG. 11A is a plan view of a bracket body of the forward bracket assembly of FIG. 7;
FIG. 11B is a side view of an attachment bar of the forward bracket assembly of Fig 7;
FIG. 12 is a perspective view of a rear portion with a rear bracket assembly of the work vehicle of FIG. 1 according to one embodiment or aspect of the present disclosure;
FIG. 13 is another perspective view of the rear portion and rear bracket assembly of FIG. 11;
FIG. 14 is a rear perspective view of the rear bracket assembly of FIG. 11;
FIG. 15 is an exploded view of the rear portion and rear bracket assembly of FIG. 11;
FIG. 16 is a side view of the rear bracket body;
FIG. 17 is a perspective view of a wheel assembly and forward bracket assembly according to another embodiment or aspect of the present disclosure;
FIG. 18 is a plan view of the wheel assembly and forward bracket assembly of FIG. 17;
FIG. 19 is a plan view of the forward bracket body of the forward bracket assembly of FIG. 17;
FIG. 20 is a perspective view of the wheel assembly and forward bracket assembly of FIG. 17 in another arrangement;
FIG. 21 is a perspective view of a wheel assembly and forward bracket assembly according to another embodiment or aspect of the present disclosure;
FIG. 22 is a cross-sectional view of the post of the wheel assembly and forward bracket assembly of FIG. 21 taken along line B-B;
FIG. 23 is a plan view of the forward bracket body of FIG. 21;
FIG. 24 is a perspective view of a wheel assembly and forward bracket assembly according to another embodiment or aspect of the present disclosure;
FIG. 25 is a plan view of the forward bracket body of FIG. 24;
FIG. 26 is a perspective view of a wheel assembly and forward bracket assembly according to another embodiment or aspect of the present disclosure;
FIG. 27 is a cross-sectional view of the wheel post of the wheel assembly and forward bracket body of FIG. 26 taken along line C-C;
FIG. 28 is a perspective view of a spacer of the forward bracket assembly of FIG. 26;
FIG. 29 is a perspective view of a wheel assembly and forward bracket assembly according to another embodiment or aspect of the present disclosure; and
FIG. 30 is a perspective view of a wheel assembly and forward bracket assembly according to another embodiment or aspect of the present disclosure.

### DESCRIPTION OF THE INVENTION

As used herein, the singular form of "a", "an", and "the" include plural referents unless the context clearly dictates otherwise.

The term "includes" is synonymous with "comprises".

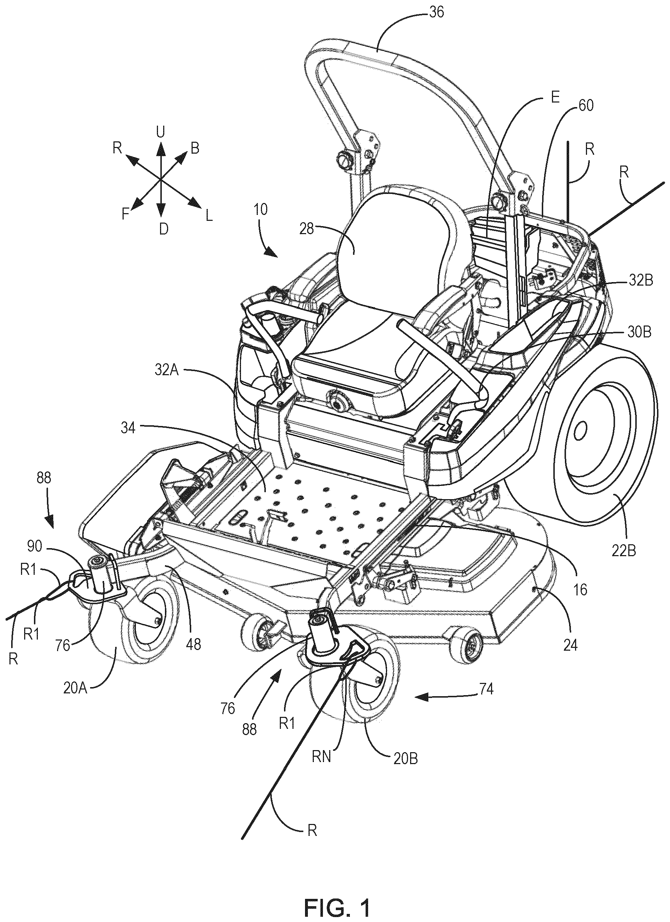

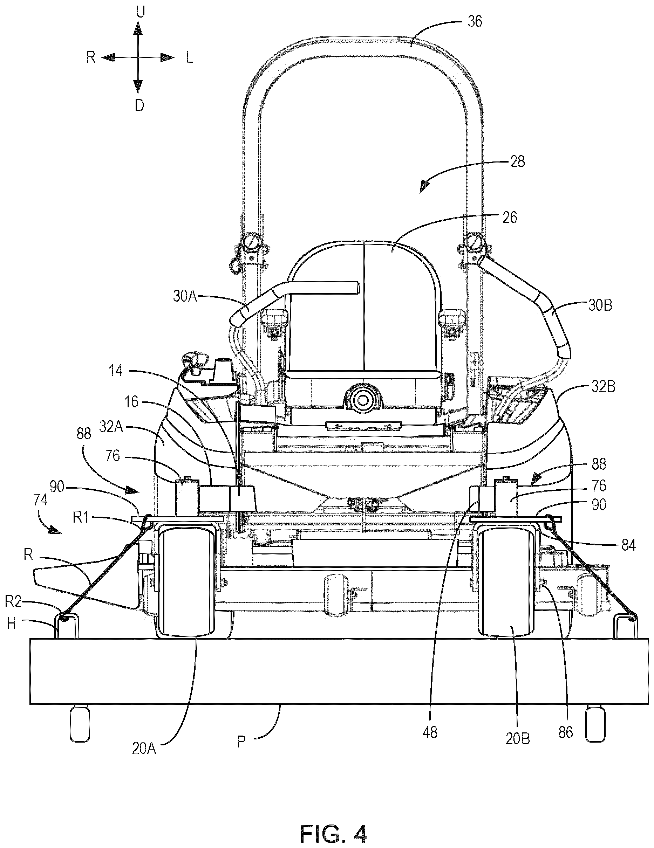

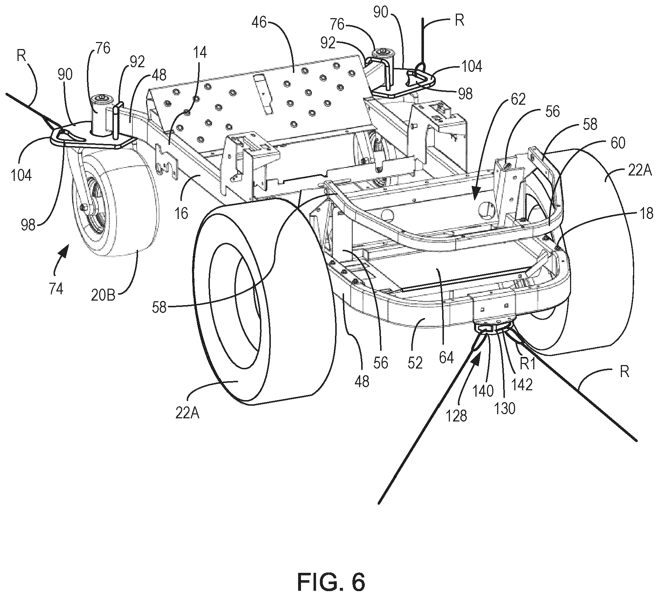

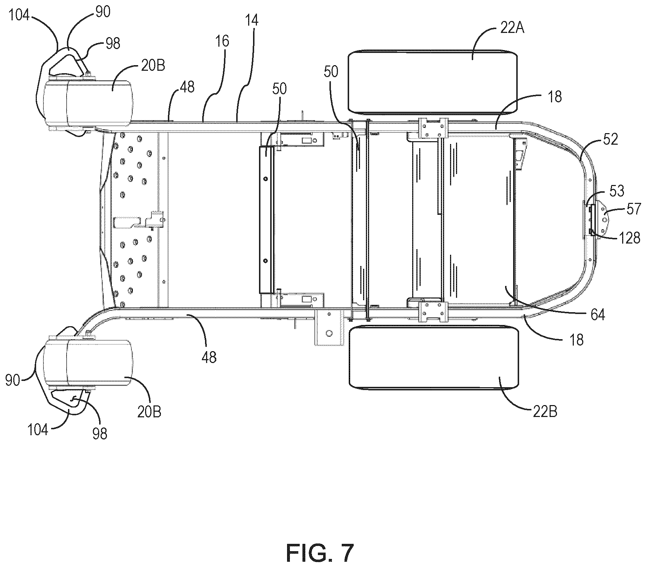

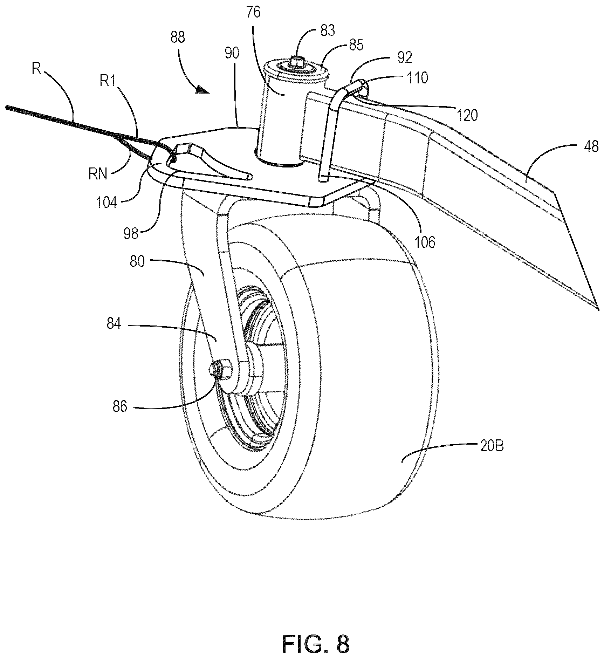

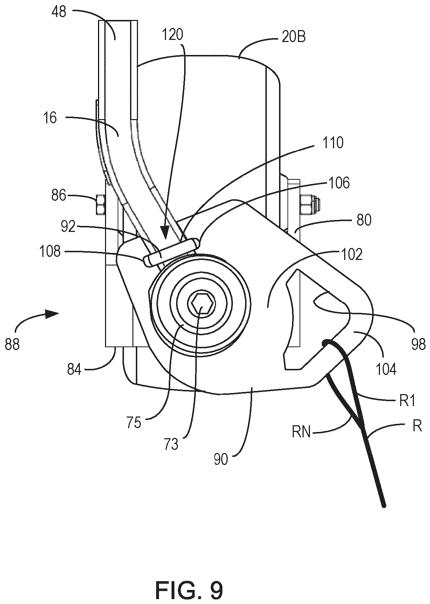

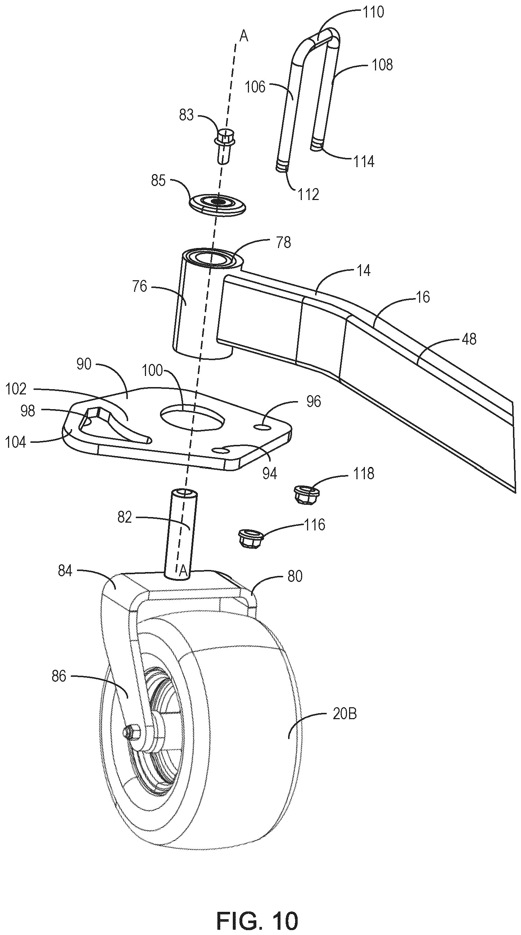

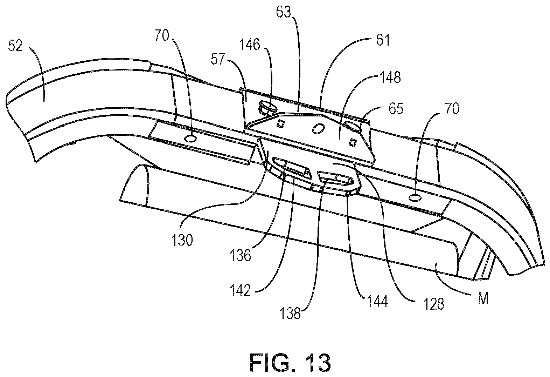

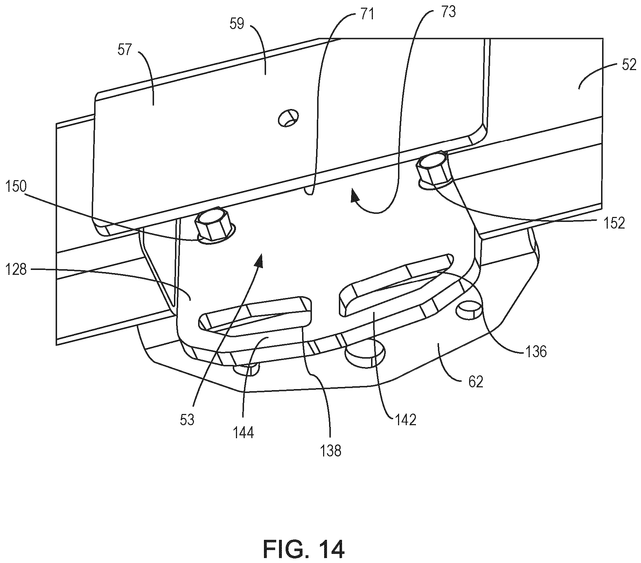

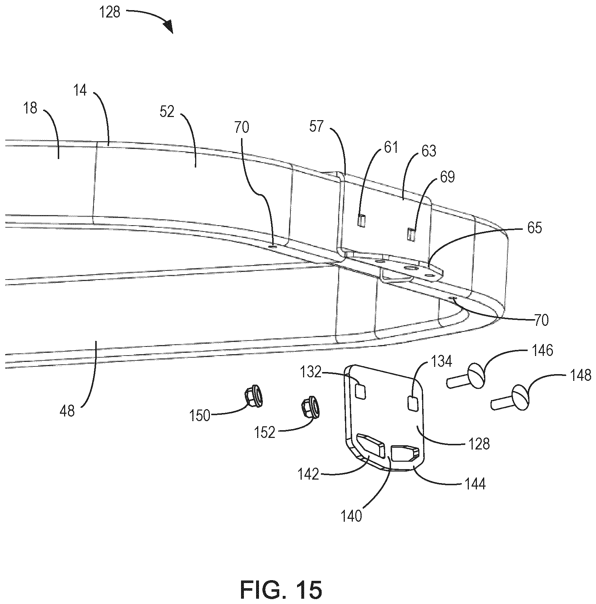

FIGS. 1-10 and 12-15 show "F" to indicate a front or forward direction, "B" to indicate a back or backward direction, "U" to indicate an upper or upward direction, "D" to indicate a down or downward direction, "L" to indicate a left or leftward direction, and "R" to indicate a right or rightward direction. These directional terms are not to be considered as limiting as the disclosure can assume various alternative orientations.

The present disclosure also references features located inside and outside of other features. These directions describe positions relative to a center point of a work vehicle 10 (i.e. the center of the forward, backward, upward, downward, leftward, and rightward directions). For example, if two elements are located on the left side of the center point of the work vehicle 10, then the element that is positioned farthest in the leftward direction is considered to be outside of the other element, and the element that is positioned farthest in the rightward direction is considered to be inside of the other element. The same relative terminology is true with respect to the other directions. These relative terms are also not considered to be limiting.

### General Configuration of the Work Vehicle

FIGS. 1-5 show a work vehicle 10 according to one embodiment or aspect of the present disclosure. The work vehicle 10 is a riding-type mower, and these two terms may be used interchangeably throughout this disclosure. The riding-type mower 10 is an example of a work vehicle, and it is to be understood that other work vehicles, such as a tractor, mower, all-terrain vehicle, cart, etc. may be used in connection with this disclosure. The riding-type mower 10 includes a body 12 having a frame 14. The frame 14 includes a first frame 16 extending in the forward F direction, and a second frame 18, extending in the backward B direction. Extending from and supported by the first frame 16 are front wheel assemblies 74. Extending from and at least partially supported by the second frame 18 is a rear wheel unit. The front wheel assemblies 74 include driven front wheels 20A, 20B. The exact arrangement of the front wheel assemblies 74 and how they connect the driven front wheels 20A, 20B will be described in greater detail below. The driven front wheels 20A, 20B may be referred to as forward wheels due to their displacement relative to the body 12 in the forward F direction. The rear wheel unit has driving rear wheels 22A, 22B. Supported by the frame 14 between the front wheel unit and the rear wheel unit is a mower unit 24. A link mechanism is used to connect the mower unit 24 to the frame 14. In some embodiments, the mower unit 24 may be supported entirely by the first frame 16. In other embodiments, the mower unit 24 may be supported entirely by the second frame 18. In other embodiments, the mower unit 24 may be supported by both the first frame 16 and the second frame 18.

The riding-type mower 10 includes a driver section 26 at a central portion of the body 12 in the front-back direction. The driver section 26 includes, for example, a driver's seat 28 for a driver to sit on and a pair of left and right control levers 30A, 30B. The riding-type mower includes two fenders 32A, 32B respectively to the left and right of the driver section 26, a floor 34 forward of the driver section 26, and a roll-over protection system (ROPS) 36 arranged backward of the driver section 26.

Backward of the driver section 26, the body 12 includes an engine E that provides power to drive the driving rear wheels 18A, 18B. The engine E is supported within the second frame 18, which will be described in greater detail below. Associated with the engine E is a muffler M. The placement of these features will be discussed in connection with the frame 14 and connected features below. It is understood that additional features, such as an exhaust gas cleaning device, a cooling fan, and an air cleaner may be used with the engine and displaced relative thereto. Although not shown, a hood may also be used to cover the engine E and these other features. A bumper may also extend along a portion of the body 12 backward of the engine E. A support plate 46 may also extend between forward portions of the first frame 16.

### The Frame Structure

As shown in FIGS. 1-7, the frame 14 includes the forwardly positioned first frame 16 and the backwardly positioned second frame 18. The first frame 16 and the second frame 18 both include a pair of left and right main frame members 48 that extend in the front-back direction of the body 12. Auxiliary frame members 50 extend between the left and right main frame members 48 in the first frame 16 and may provide support to the frame 14 as well as those features located on top of the frame, such as the driving section 26. Although not shown, auxiliary frame members may also extend between the main frame members 48 of the second frame 18. Additional auxiliary frame members 50 may be used as needed.

The second frame 18 includes an end frame 52 extending between the main frame members 48 of the second frame 18 at the backward most location of the frame 14. The end frame 52 marks the end of the frame 14 in the front-back direction. The majority of the end frame 52 is shaped like a bar, with sidewalls extending along each side in the upward, downward, frontward, and backward directions. However, proximate the center of the end frame 52 in the left-right direction an open section 53 is defined. The open section 53 is a section where the end frame 52 only has an upper sidewall lacks sidewalls in the frontward, backward and downward directions. A hitch connector 57 extends over the open section 53, so as to essentially provide sidewalls extending in the up-down direction along the front side and the back side of the open section 53. The hitch connector 57 includes a front sidewall 59, an upper sidewall 61, a back sidewall 63, and an extension 65. The front sidewall 59 extends over the front of the open section 53 in the up-down direction, the upper sidewall 61 extends over the upper sidewall of the end frame, and the back sidewall 63 extends over the back of the open section 53 in the up-down direction. The extension 65 extends from the back sidewall 63 in the front-back direction to receive a hitch or other connecting device thereon. The back sidewall 63 also defines a first rear aperture 67 and a second rear aperture 69. This arrangement defines a slot 71 relative to the end frame 52. The slot 71 has an opening 73 defined in the left-right and front-back directions between the end frame 52, the front sidewall 59, and the back sidewall 63. The rear apertures 67, 69 are arranged so as to be exposed within the slot 71. This allows for features such as a rear bracket assembly 128 to be connected to the riding-type mower 10 within the open section 53 and slot 71. This will be described in greater detail below.

Extending from a portion of the second frame 18 proximate the seat 28 is an upper frame 54. The upper frame 54 includes left and right posts 56 extending generally in the up-down direction from the main frame members 48 of the second frame 18. The left and right posts 56 may also be slightly angled relative to the up-down direction, meaning they may extend some distance in the front-back direction. Extending from the posts 56 in the front-back direction are upper frame members 58. The upper frame members 58 extend front-back direction in the same general direction as the main frame members 48 of the second frame 18, so that at least a portion of the upper frame members 58 overlap the main frame members 48 of the second frame 18 in a plan view. As shown, the upper frame members 58 are tilted in the downward direction as they extend backward. In other embodiments, the upper frame members 58 may not be tilted and may only extend backwards from the posts 56. An upper end frame 60 extends between the end points of the upper frame members 58 in the left-right direction. The upper end frame 60 extends in left-right direction, so that at least a portion of the upper end frame 60 overlaps the end frame 52. The second frame 18 is typically thicker than the upper frame 54. This allows for the second frame 18 to support features such as the engine E, which will now be described.

The arrangement of the second frame 18 and the upper frame 54 is such that a space 62 is defined between the main frame members 48, the end frame 52, the upper frame members 58, and the upper end frame 60. The space 62 is used to hold the engine E and its associated features, such as a muffler M, exhaust gas cleaning device, cooling fan, and air cleaner.. A support platform 64 is connected to and extends between the main frame members 48 to provide support for the engine E when it is held in the space 62. The support platform 64 may also further define the space 62. A grate 75 is connected to and extends between the upper frame 54 and the second frame 18 to protect the engine E and its associated features from the back of the frame 14.

### Features Connected to the Frames

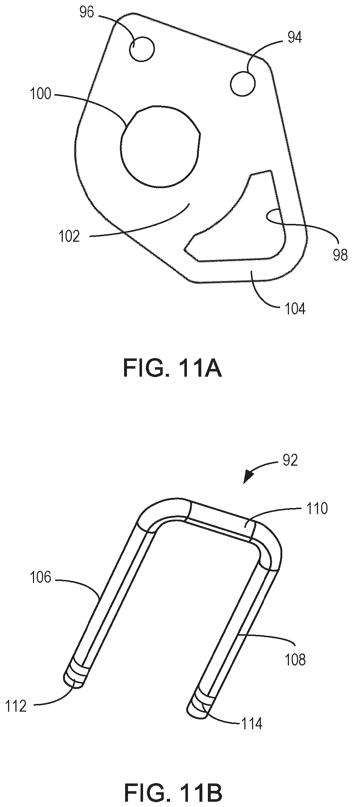

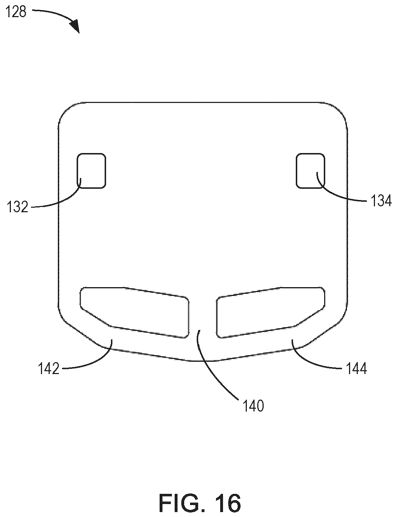

With reference to FIGS. 1-16, different features are connected to the frame 14. Examples of these features are a guard 66, wheel assemblies 74, forward bracket assemblies 74, and a rear bracket assembly 128.

### Guard

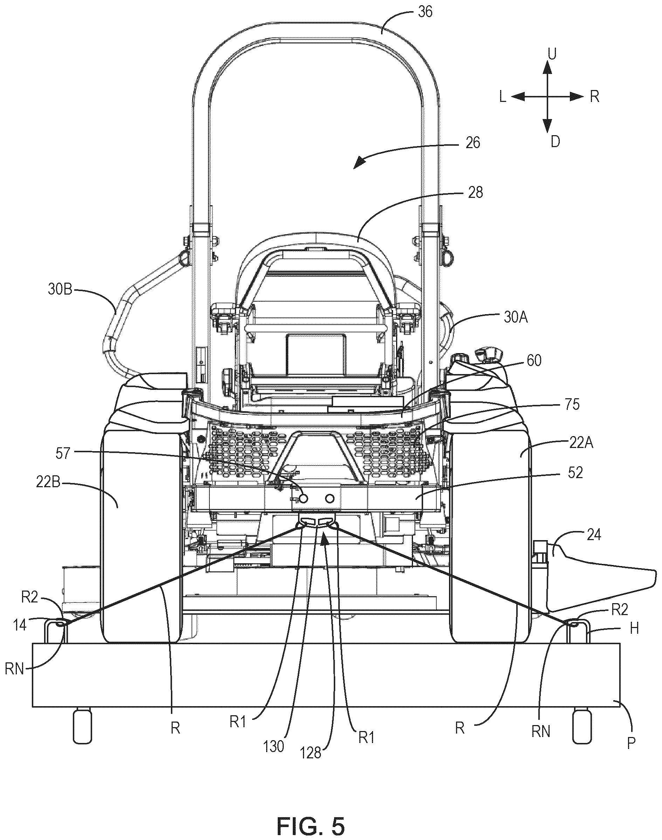

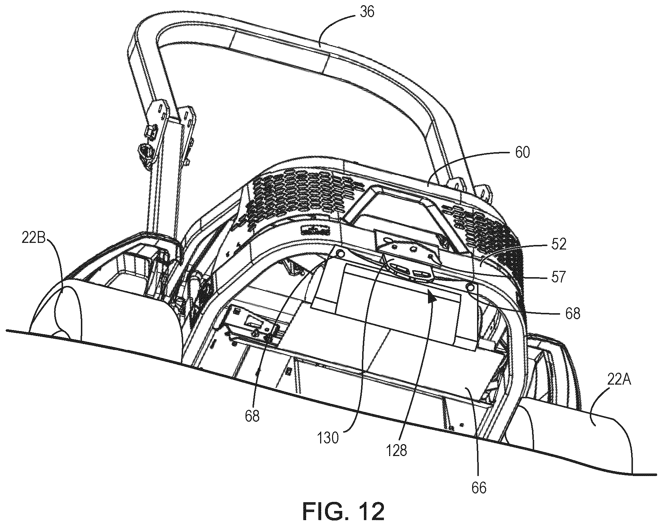

As shown in FIGS. 5 and 12, a guard 66 is connected to and extends between the main frame members 48 of the second frame 18 and the end frame 52. The guard 66 covers the downward facing part of the space 62 that is not covered by the support platform 64. The guard 66 provides additional protection for the engine E and muffler M, so that they are not damaged by debris that is kicked up from under the riding-type mower 10 by the actions of the mower unit 24 or other actions unrelated to the operation of the riding-type mower 10. In some embodiments, the guard 66 may be used to cover and/or protect only the muffler M. The guard 66 is secured to the second frame 18 and end frame 52 via fasteners 68 and is detachably mounted thereto. The fasteners 68 are received within apertures defined in the guard 66 and apertures 70 defined in the end frame 52. As shown, the apertures 70 are located on downward facing sides of the end frame 52, but the guard 66 may be arranged, so that apertures 70 are located on other sides of the end frame 52 and/or main frame members 48. In another example, a portion of the guard 66 may be secured to the support platform 64, in which case the support platform 64 will also have apertures to receive the fasteners 60 therethrough.

### Wheel Assemblies

As shown in FIGS. 1-4 and 6-10, wheel assemblies 74 extend from the main frame members 48 of the first frame 16. A wheel assembly 74 is used to connect a driven front wheel 20 to the main frame member 48. The wheel assemblies 74 include wheel posts 76, which are located at the end of the main frame members 48 of the first frame 16, and wheel brackets 80 that connect the driven front wheels 20A, 20B to the wheel posts 76. A wheel post 76 defines an aperture 78 that extends generally in the up-down direction and is shaped to receive a shaft 82 of a corresponding wheel bracket 80 within the downward facing opening. To connect the aperture 78 and shaft 82, a fastener 83 extends through the upward facing opening of the aperture 78. This arrangement means that the wheel post 76, aperture 78, shaft 82, and fastener 83 share an axis A. The fastener 83 is arranged complementary to the shaft 82, so that the shaft 82 is secured to the fastener 83 within the aperture 78. This arrangement can be done with corresponding threads on both features. In one example, the shaft 82 has threads on an outside surface, and the fastener 83 is hollow, with threads extending along the inner surface of the hollow to receive the shaft therein. In another example, the shaft 82 is hollow and includes threads on an inner surface of the hollow, and the fastener 83 has corresponding threads on an outside surface to be received within the shaft 82. In yet another example, the shaft 82 may have a frictional engagement with the fastener 83, with the shaft 82 fitting inside of the hollow fastener 83, or the fastener 83 may fit inside of the hollow shaft 82. A washer 85 is also used to abut the upper surface of the wheel post 76 to provide a surface over which the fastener 83 applies a force to further facilitate the connection described above.

In another embodiment, the fastener 83 and washer 85 may be omitted, and the aperture 78 and post 82 may have corresponding threads, so that the post 82 is secured within the aperture 78 by way of these threads.

Extending from the shafts 82 of the wheel brackets 80 are wheel connectors 84. The connectors 84 are generally U-shaped and extend over the wheels 20 and terminate at ends 86 that connect to the axis of the wheels 20. The ends 86 can be connected to a wheel 20 via corresponding threaded connections, fasteners, or other methods. A connector 84 may also be made of a material that can bend or flex to allow for the removal and replacement of a wheel 20 between the ends 86 of a connector 84. The connectors 84 are shaped to provide enough clearance for the wheels 20 to freely rotate about its axis between the ends 86. In this configuration, the wheels 20 are secured to the frames 14 via the connectors 84 and posts 76.

### Forward Bracket Assemblies

As shown in FIGS. 1-4 and 5-11B, forward bracket assemblies 88 are also connected to the main frame members 48 of the first frame 16 and part of the wheel assemblies 74. Forward bracket assemblies 88 can be provided for one or more of the driven front wheels 20A, 20B and are used to secure a rope R to the work vehicle 10 at a first end R1 of the rope R. The rope R is an example of a connecting apparatus and provides stabilization and towing capabilities. In one example, the riding-type mower 10 is placed on a platform P that is part of or connected to a trailer or other towing device. The rope R is provided to stabilize the riding-type mower 10 on the platform P. Here, the rope R is secured to a hook H or another feature connected to the platform P at a second end R2 of the rope R. In some instances, the riding-type mower 10 can be towed directly via the rope R, instead of being placed on the platform P. While a rope R is shown, other connecting apparatuses may be used, such as a strap or a chain. The exact details of the connections between the rope R and the riding-type mower 10 will be discussed in greater detail below.

The forward bracket assembly 88 includes a forward bracket body 90 and an attachment bolt 92 that secures that forward bracket body 90 to the main frame members 48 and/or wheel assemblies 74. The forward bracket body 90 defines a plurality of apertures that facilitate the connection to the main frame members 48 and/or wheel assemblies 74. Specifically, the forward bracket body 90 defines a first mounting aperture 94, a second mounting aperture 96, a connecting aperture 98, and an alignment aperture 100. The placement of the apertures 94, 96, 98, 100 within the forward bracket body 90 further defines a bridge 102 extending between the connecting aperture 98 and the alignment aperture 100. An anchor 104 is also defined along the connecting aperture 98, which will be used to secure the rope R to the forward bracket body 90 as described below. The connecting aperture 98 is shown as generally triangular in shape, but one will understand that other shapes may be used and the forward bracket assembly 88 can still be used in the manner described herein.

The attachment bolt 92 is shaped to extend over the main frame body 48 and secure the forward bracket body 90 to the main frame body 48. As shown, the attachment bolt 92 is U-shaped and includes a first leg 106, a second leg 108, and a transverse segment 110 extending between the legs 106, 108. An end 112 of the first leg 106 extends at least partially through the first mounting aperture 94 on the forward bracket body 90, and an end 114 of the second leg 108 extends at least partially through the second mounting aperture 96. The ends 112, 114 are threaded, so that a first nut 116 is used to secure the first end 112 to the forward bracket body 90, and a second nut 118 is used to secure the second end 114 to the forward bracket body 90. When the attachment bolt 92 is secured to the forward bracket body 90 in this manner, both features define a mounting space 120 that is shaped to receive the main frame body 48 therebetween. This arrangement secures the forward bracket assembly 88 to the main frame body 48. Different shapes and arrangements of the attachment bolt 92 and forward bracket body 90 may be used to accommodate different shapes and/or arrangements of the main frame body 48.

The connecting aperture 98 is arranged within the forward bracket body 90, so that it extends outside of the main frame member 48 to which the forward bracket assembly 88 is attached. The connecting aperture 98 is shaped to receive the rope R therethrough, so that the rope R can be tied to the anchor 104 located adjacent to the connecting aperture 98. To facilitate this connection, the rope R has a ring RN at its first end R1, and the ring RN can be secured around the anchor 104. The rope R may also be tied around the anchor 104 by extending through the connecting aperture 98. By securing the forward bracket assembly 88 to the main frame member 48, the rope R can be attached as described to secure the riding-type mower 10 for transport. The riding-type mower 10 can be transported on a platform P, as shown, where two ropes R are connected to forward bracket assemblies 88 secured to both sides of the main frame member 48 of the first frame 16. In other examples, the rope R can be secured to one or more forward bracket assemblies 88 to allow for the riding-type mower 10 to be pulled via the rope(s) R.

The alignment aperture 100 is the largest of the apertures 94, 96, 98, 100 and is shaped to fit around a bottom portion of the wheel post 76 in order to receive that bottom portion of the wheel post 76 and the shaft 82 of the wheel bracket 80 therethrough. When the alignment aperture 100 is secured around the bottom portion of the wheel post 76 and the shaft 82 is received in both the alignment aperture 100 and the aperture 78 of the wheel post 76, the alignment aperture 100 shares the axis A with the wheel post 76, shaft 82, and fastener. Each of the apertures 94, 96, 98, 100 are arranged, so that the placement of the alignment aperture 100 relative to the shaft 82 aligns the first mounting aperture 94, second mounting aperture 96, and connecting aperture 98 in their proper positions to allow for the attachment bolt 92 and rope R to be connected as described above. In other words, the placement of the alignment aperture 100 relative to the post 76 and/or shaft 82 allows for the forward bracket assembly 88 to be easily mounted to its respective main frame member 48.

As shown, the apertures 94, 96, 98, 100 are arranged within the forward bracket body 90, so that the connecting aperture 98 is disposed outside of the other apertures 94, 96, 100. This allows the rope R to be secured to the bracket body 90 with minimal interference from parts of the frame 14 and/or the wheel assembly 74 located nearest the forward bracket assembly 88. Given the shape of main frame member 48, the first mounting aperture 94 is disposed inward of the other apertures 96, 98, 100, and the second mounting aperture 96 is located backward of the other apertures 94, 98, 100. In some embodiments, part of the connecting aperture 98 may extend backward to be at or close to the backward position of the second mounting aperture 96. At least part of the alignment aperture 100 is located forward of the other apertures 94, 96, 98. If the shapes or arrangements of the main frame members 48 and wheel assemblies 74 are to be modified, one will understand the need for potential rearrangement of the disclosed apertures 94, 96, 98, 100 to allow for the forward bracket assembly 88 to still be secured to the main frame members 48 and wheel assemblies 74.

Methods of attaching the forward bracket assembly 88 will now be described. To begin the mounting process, the wheel assembly 74 is disconnected from its respective wheel post 76 formed at the end of the main frame portion 48. This is done by disconnecting the fastener 83 from the top of the aperture 78 and the shaft 82 and removing the shaft 82 from the aperture 78. Then, the forward bracket body 90 is placed against a downward facing side of the main frame member 48, with the alignment aperture 100 aligned with the bottom of the wheel post 76. From here, the attachment bolt 92 is secured to the forward bracket body 90 by extending the ends 112, 114 of the legs 106, 108 through their respective mounting aperture 94, 96 and securing the nuts 116, 118 to the ends 112, 114 against a downward facing side of the forward bracket body 90. Then the wheel assembly 74 is reattached by inserting the shaft 82 through the alignment aperture 100 and the aperture 78 in the wheel post 76. The fastener 83 is inserted into the upward facing opening of the aperture 78, so that it is connected to the shaft 82 within the aperture 78 of the wheel post 76. After the forward bracket assembly 88 is secured to the main frame portion 48, the first end R1 of the rope R or other connecting apparatus can be secured to the anchor 104 of the forward bracket body 90. The second end R2 of the rope R may already be secured to its hook H, or at this point the second end R2 may be secured to the hook H. The connection of additional ropes R to a back side of the riding-type mower 10 will now be discussed in connection with a rear bracket assembly 128.

### Rear Bracket Assembly

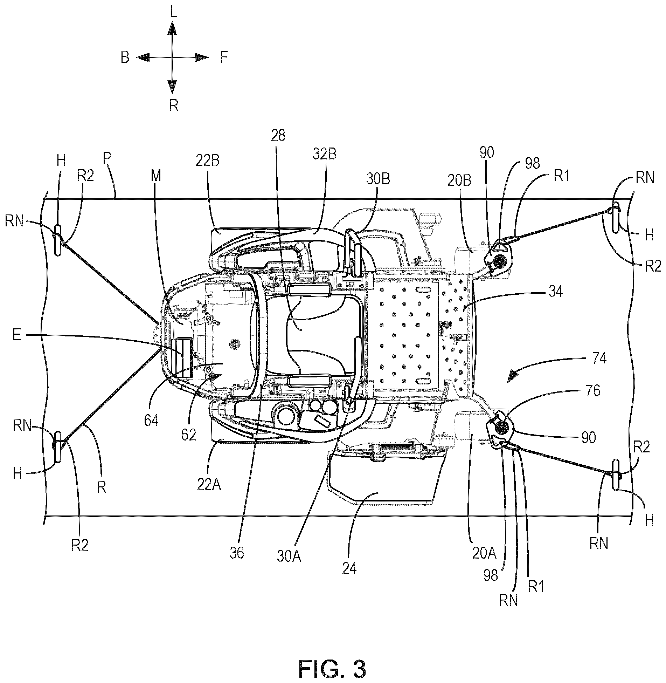

As shown in FIGS. 3, 5, and 12-16, the rear bracket assembly 128 has a rear bracket body 130 that is connected to the back sidewall 63 of the hitch connector 57 from within the open section 53 and slot 71. The rear bracket body 130 is arranged so that at least a portion extends through the opening 73 and outside of the slot 71 in the downward direction. The rear bracket body 130 defines a first mounting aperture 132, a second mounting aperture 134, a first connecting aperture 136, and a second connecting aperture 138. The arrangement of the connecting apertures 136, 138 in the rear bracket body 130 defines a divider 140 in the rear bracket body 130 that divides the connecting apertures 136, 138. Similar to the forward bracket body 90, the rear bracket body 130 also includes two anchors 142, 144 adjacent to the connecting apertures 136, 138. A first anchor 142 extends along the rear bracket body 130 adjacent to the first connecting aperture 136, and a second anchor 144 extends along the rear bracket body 130 adjacent to the second connecting aperture 138. The connecting apertures 136, 138 and their associated anchors 142, 144 are arranged so that first ends R1 of one or more ropes R can be connected to the anchors 142, 144. The first ends R1 have rings RN that extend through one or both of the first connecting aperture 136 and the second connecting aperture 138 to be secured around the first anchor 142 and/or the second anchor 144. One or more ropes R may also be secured to the divider 140 that extends between the connecting apertures 136, 138.

The mounting apertures 132, 134 defined in the rear bracket body 130 are arranged to be aligned with the rear apertures 67, 69 defined by the hitch connector 57 about the open section 53. This alignment allows for fasteners 146, 148 to secure the rear bracket body 130 to the hitch connector 57. In other words, the first mounting aperture 132 is aligned with the first rear aperture 67, and the second mounting aperture 134 is aligned with the second rear aperture 69. Fastener 146 is received within the first mounting aperture 132 and the first rear aperture 67, and fastener 148 is received within the second mounting aperture 134 and the second rear aperture 69. The fasteners 146, 148 are shaped to fully extend through their respective apertures 132, 67, 134, 69, so that locking nuts 150, 152 can be secured to the ends of the fasteners 146, 148 extending out of the back sidewall 63 of the hitch connector 57. A first locking nut 150 corresponds to the first fastener 146, and a second locking nut 152 corresponds to the second fastener 148. In other embodiments the fasteners 146, 148 may be threaded and apertures 132, 67, 134, 69 may have corresponding threads to secure the fasteners 146, 148 to both the back sidewall 63 and rear bracket body 130.

When the rear bracket body 130 is secured to the hitch connector 57, the connecting apertures 136, 138 are located downward of the mounting apertures 132, 134. The size of the rear bracket body 130 is such that the connecting apertures 136, 138 extend beyond the opening 73 of the slot 71 and are exposed outside of the hitch connector 57 and end frame 52. This allows for the one or more ropes R to be secured to the anchors 142, 144 and/or the dividing portion 140. Like the ropes R described above in connection with the forward bracket assembly 88, the ropes R include rings RN at a first end R1 that extend around the anchors 142, 144. The ropes R also have rings RN at a second end R2 that connect to the hooks H on the platform P. The ropes R can also be used to directly tow the riding-type mower 10.

A method of installing the rear bracket assembly 128 will now be described. As described above, the guard 66 extends across main frame members 48 and end frame 52 such that a portion of the guard 66 covers the opening 73 of the slot 71. Therefore, to begin the installation process, the guard 66 will be removed by disconnecting the fasteners 68 from their respective apertures in the guard 66 and end frame 52 and/or main frame members 48. After the guard 66 is removed, the rear bracket body 130 is inserted through the opening 73 and into the slot 71, aligning the first mounting aperture 132 with the first rear aperture 67 exposed within the slot 71 and aligning the second mounting aperture 134 with the second rear aperture 69 within the slot 71. Next, the first fastener 146 is inserted into the first mounting aperture 132 and first rear aperture 67, and locking nut 150 is applied to the end of the first fastener 146 extending out of the first rear aperture 67 in the front direction. Then, the second fastener 148 is inserted through the second mounting aperture 134 and second rear aperture 69, and locking nut 152 is applied to the end of the second fastener 148 extending out of the second rear aperture 69 in the front direction. After the rear bracket body 130 is secured to the hitch connector 57 within the slot 71, the guard 66 is resecured to the main frame members 48 and end frame 52 by aligning the respective apertures and inserting fasteners 68 therethrough. The shape of the guard 66 is such that part of the guard 66 still covers the opening 73, but not the part of the opening 73 through which the rear bracket body 130 extends. At this point, the ropes R or other connecting apparatuses may be attached to their desired anchor(s) 142, 144. The ropes R may also be secured prior the guard 66 beign reconnected.

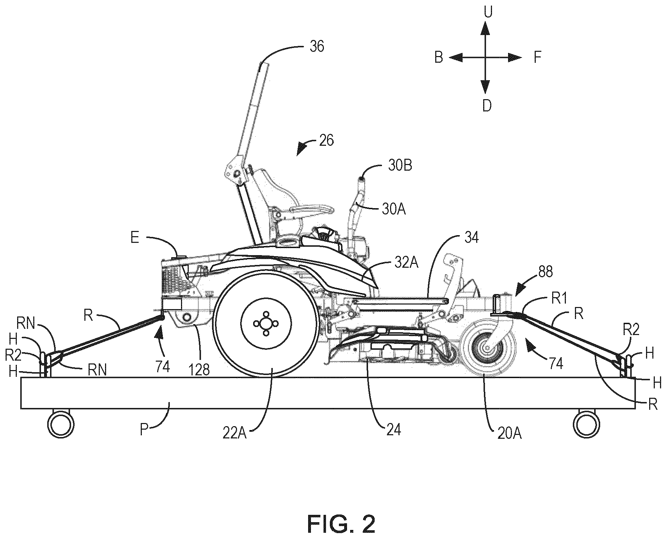

As shown in FIGS. 2, 3, and 5, the ropes R extend obliquely in a downward and backward direction from the body 12. The arrangement of these ropes R in addition to those connected to the forward bracket assemblies 88 allows for the riding-type mower 10 to be moved easily in the vertical or horizontal direction on the trailer T by providing stability to the riding-type mower 10 during transport on the trailer T.

### Other Embodiments of the Bracket Assemblies

In another embodiment, the forward bracket body 90 of the forward bracket assembly 88 may not include the alignment aperture 100. Instead of including an alignment aperture 100, the forward bracket body may be shaped so that it does not engage with the wheel assembly 74. In this embodiment, the forward bracket body 90 is simply connected to the main frame member 48 by securing the ends 112, 114 of the legs 106, 108 of the attachment bolt 92 to the first and second mounting apertures 94, 96.

Referring to the rear bracket assembly 128, instead of defining two connecting apertures 136, 138, the rear bracket body 130 may define a single connecting aperture (not shown) extending along a downward portion of the body 130. To do this, the dividing portion 140 may be removed, which combines the two connecting apertures 136, 138 into one. Similarly, there may be three or more connecting apertures disposed within the rear bracket body 130 to provide additional anchors and dividing portions, so that one or more ropes R can be attached thereto. Other shapes and positions of the one or more connecting apertures may also be contemplated. For example, the connecting apertures may be disposed proximate the left and right ends of the rear bracket body 130, defining a longer dividing portion 140. This configuration may allow for ropes R located at corners of the platform P to be more easily attached to the rear bracket body 130.

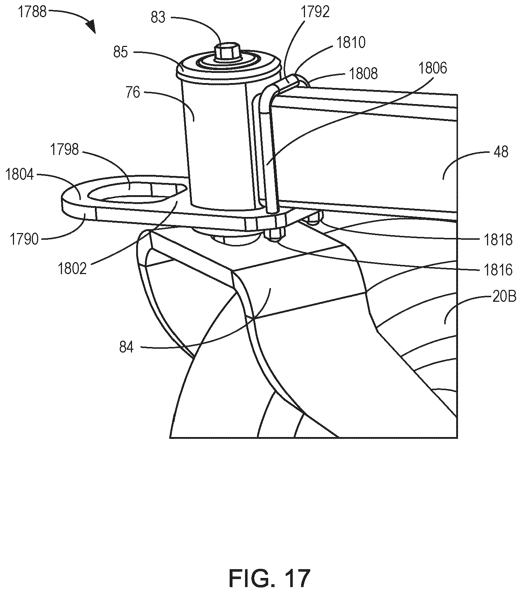

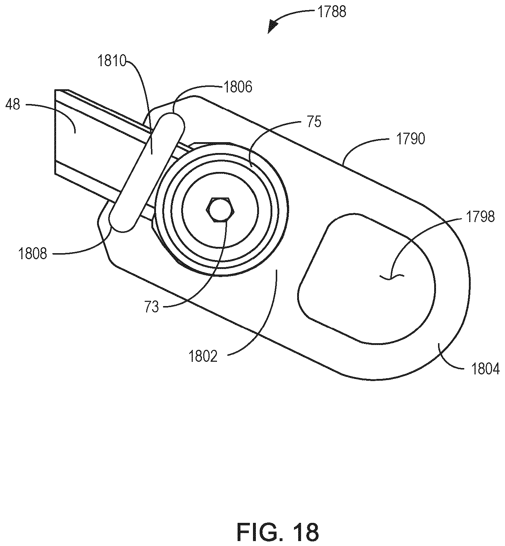

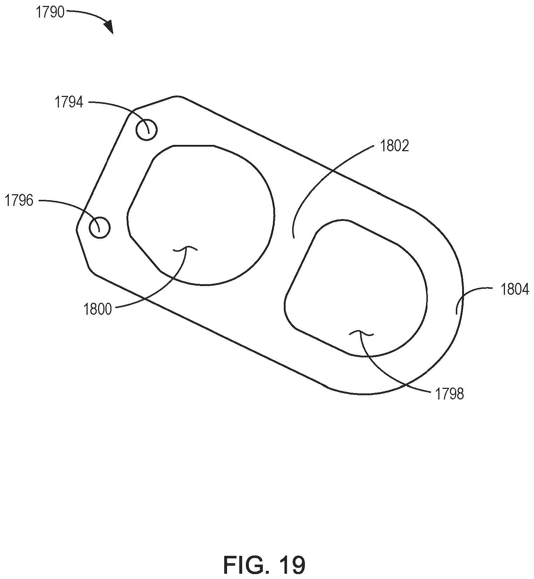

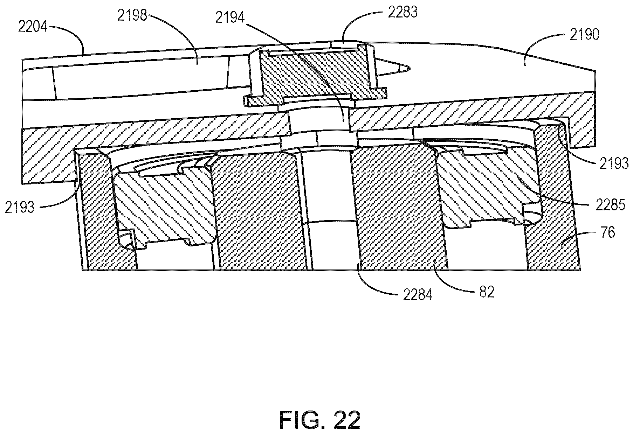

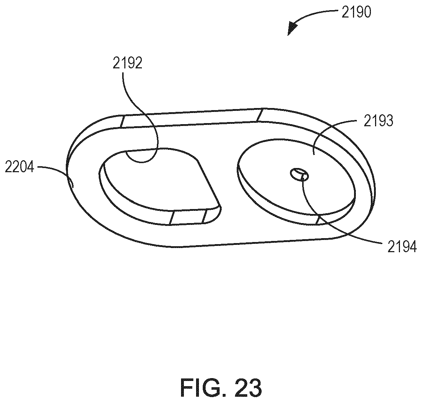

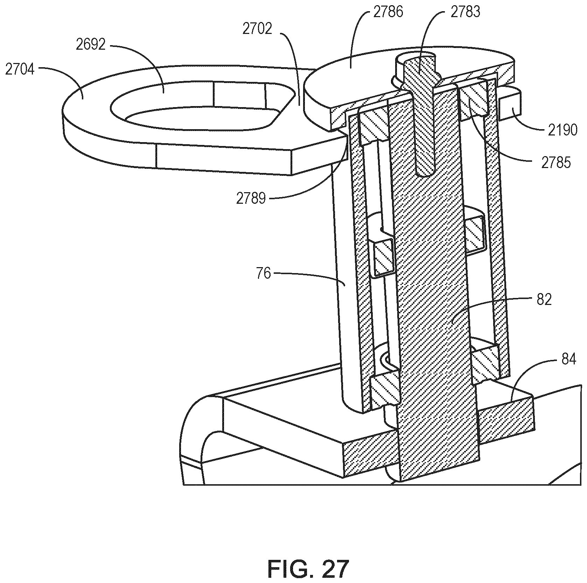

Referring to FIGS. 17-30, additional embodiments of a forward bracket assembly are shown. These embodiments will now be discussed. Features that are similar to those discussed above in connection with forward bracket assembly 88 will share similar element numbers for ease of reference.

With reference to FIGS. 17-20, another embodiment of a forward bracket assembly 1788 is shown that is similar to the forward bracket assembly 88 discussed above and maintains much of the same functionality. The forward bracket assembly 1788 includes a forward bracket body 1790 and an attachment bolt 1792 that secures the forward bracket body 1790 to a main frame member 48 and/or wheel assembly 74. The forward bracket body 1790 defines a first mounting aperture 1794, a second mounting aperture 1796, a connecting aperture 1798 and an alignment aperture 1800. A first end 1812 of the attachment bolt 1792 is secured to the first mounting aperture 1794 with a locking nut 1816, and a second end 1814 of the attachment bolt 1792 is secured to the second mounting aperture 1796 with a locking nut 1818. The attachment bolt 1792 is shaped to fit around the main frame member 48 to secure the forward bracket body 1790 thereto.

As shown in FIGS. 17-19, the alignment aperture 1800 is secured to a bottom portion of the wheel post 76 and receives the shaft 82 of the wheel assembly 74 therein, like the forward bracket assembly 88 discussed above. However, the arrangement of the connecting aperture 1798 and alignment aperture 1800 is such that the connecting aperture 1798 is defined directly in front of the alignment aperture 1800. This means that the connecting aperture 1798 is disposed farther in the front direction than the alignment aperture 1800 and both mounting apertures 1794, 1796. The connecting aperture 1798 is also disposed at least partially forward of the wheel assembly 74. As shown, the connecting aperture 1798 is D-shaped, but other shapes can be used. An anchor 1804 is defined on the forward bracket body 1790 adjacent to the connecting aperture 1798 to allow for the rope R to be secured thereto.

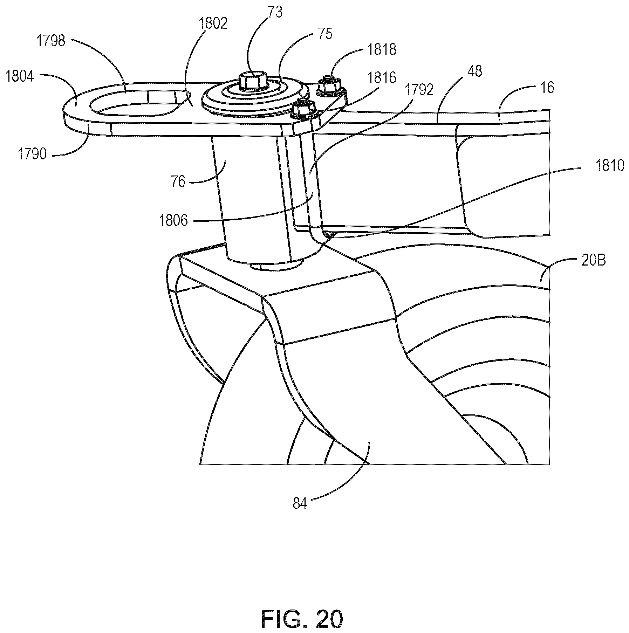

As shown in FIG. 20, the forward bracket assembly 1788 can be applied to a wheel assembly 74 in a different arrangement than is shown in FIGS. 17-19. In this arrangement, the alignment aperture 1800 of the forward bracket body 1790 is secured to a top portion of the wheel post 76, and the attachment bolt 1792 extends around the main frame member 48 in the opposite direction when compared to FIGS. 17-19, with the transverse segment 1810 of the attachment bolt 1792 extending along a downward facing side of the main frame member 48. The washer 1785 extends over the top of the wheel post 76 and is exposed in the upward direction relative to the alignment aperture 1800. The connecting aperture 1798 still extends forward of at least part of the alignment aperture 1800 and at least part of the wheel assembly 74.

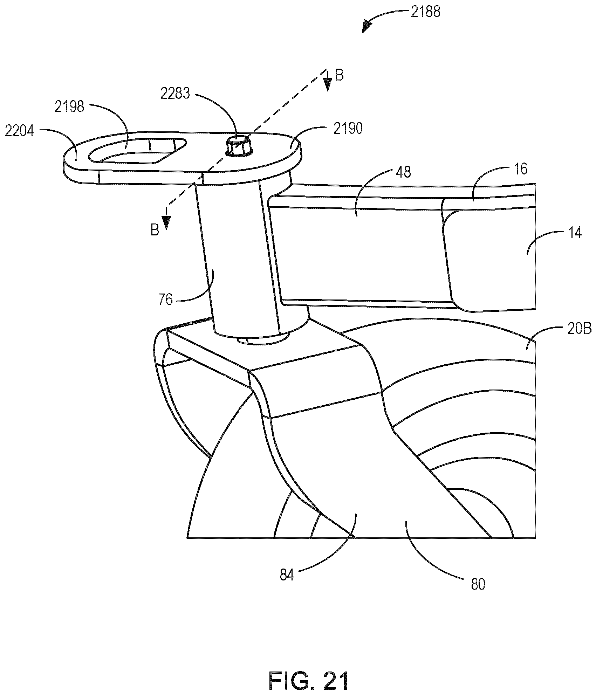

As shown in FIGS. 21-23, another embodiment of the forward bracket assembly 2188 includes a forward bracket body 2190 that is secured to the top of the wheel post 76. The forward bracket body 2190 defines an alignment space 2193 within part of the downward facing side of the forward bracket body 2190. The forward bracket body 2190 also defines a connecting aperture 2198 next to the alignment space 2193. The alignment space 2193 is shaped to be complementary to the wheel post 76 and/or washer 2285 to fit thereabout. The forward bracket body 2190 defines a mounting aperture 2194 within a perimeter of the alignment space 2193. The mounting aperture 2194 is arranged to receive the fastener 2283. This allows the fastener 2283 to extend through the mounting aperture 2194 as well as the washer 2285 and the aperture 78 to connect to shaft 82 of the wheel assembly 74. This extension of the fastener 2283 secures the forward bracket body 2190 to the wheel post 76 without the need of an additional attachment bolt. As shown, the connecting aperture 2198 is D-shaped, but other shapes can be used. The anchor 2204 is defined on the forward bracket body 2190 adjacent to the connecting aperture 2198 to allow for the rope R to be secured thereto. Because the forward bracket assembly 2188 is secured to the wheel assembly 74 via fastener 2283 on an axis that is shared by the wheel post 76 and the alignment space 2193, the forward bracket body 2190 may be placed at different positions about the post 76. This allows the connecting aperture 2198 to be located in a number of different positions about the post 76 by rotating the forward bracket body 2190 about the wheel post 76 before securing it into place.

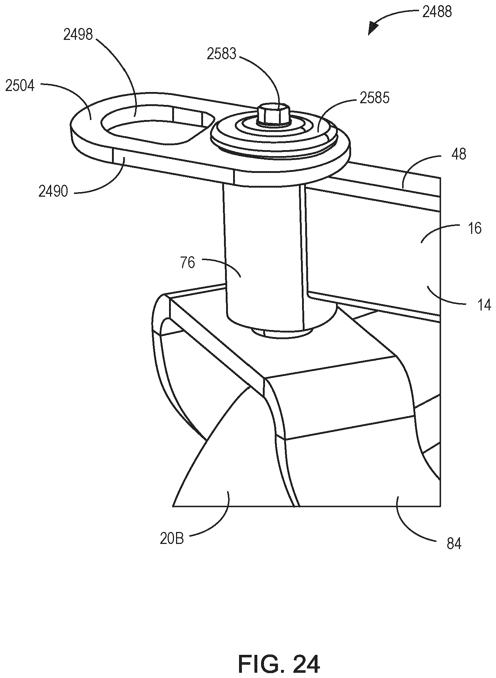

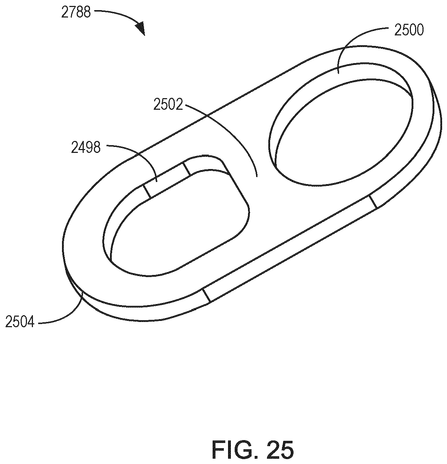

As shown in FIGS. 24 and 25, another embodiment of the forward bracket assembly 2488 includes only a forward bracket body 2490. The forward bracket body 2490 defines the connecting aperture 2498 and the alignment aperture 2500. The alignment aperture 2500 is shaped to fit snugly about the top of the wheel post 76, with the washer 2485 extending in an upward direction relative to the forward bracket body 2490. The washer 2485 may also be sized to act as a cap to provide some security to the forward bracket body 2490 proximate to the alignment aperture 2500 to keep the forward bracket body 2490 positioned about the wheel post 76. The connecting aperture 2498 is D-shaped, but may be other shapes, and the anchor 2504 extends along an end of the forward bracket body 2290 next to the connecting aperture 2498. The arrangement described also allows for the forward bracket body 2490 to be placed in a number of different orientations about the wheel post 76.

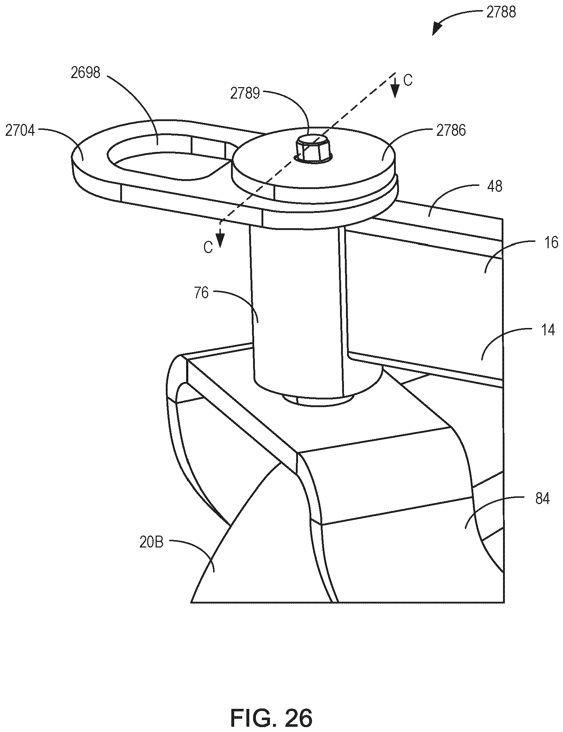

As shown in FIGS. 26-28, another embodiment of the forward bracket assembly 2688 includes a forward bracket body 2690 mounted to the top of the wheel post 76 with a spacer 2706 also secured to the top of the wheel post 76. The alignment aperture 2700 is secured about the top of the wheel post 76, and the spacer 2786 is secured to the upward end of the wheel post 76, covering the washer 2785. The spacer 2786 defines an aperture 2787 for receiving the fastener 2683 therein, so that the fastener 2683 can extend through the aperture 2785 and into the aperture 78 of the wheel post 76 to connect to the shaft 82 of the wheel assembly 74. This secures the spacer 2686 in place against the wheel post 76 and forward bracket body 2690. The spacer 2786 also defines a receiving space 2789 extending in the up-down direction from the downward side of the space 2786. The receiving space 2789 allows the spacer 2786 to be placed on the top of the wheel post 76 like a cap. The connecting aperture 2698 is again shown as being D-shaped, but other shapes may be used. The arrangement described also allows for the forward bracket body 2690 to be arranged in a number of different orientations about the wheel post 76.

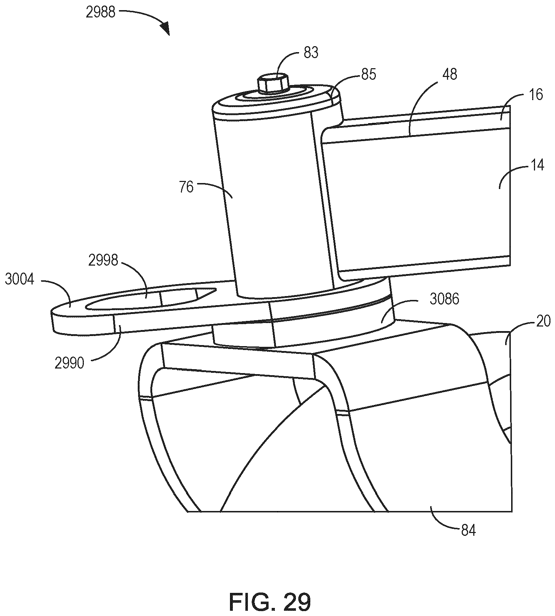

As shown in FIG. 29, another embodiment of the forward bracket assembly 2988 includes a forward bracket body 2990 and a spacer 3086 both mounted to a bottom portion of the wheel post 76. The forward bracket body 2990 is arranged upward of the spacer 3086. This secures the spacer 3086 against the upward facing surface of the wheel connector 84. To make this connection, the shaft (not shown) of the wheel assembly 74 is removed from the wheel post 76 to allow the alignment aperture (not visible) of the forward bracket body 2990 to be secured to the bottom portion of the wheel post 76. Then, a similarly sized aperture (not visible) defined in the spacer 3086 is also secured to the bottom portion of the wheel post 76 against the downward facing side of the forward bracket body 2990. The connecting aperture 2998 is again shown as being D-shaped, but other shapes may be used. The arrangement described allows for the forward bracket body 2990 to be arranged in a number of different orientations about the wheel post 76. The arrangement also allows for the rotation of the forward bracket body 2990 about the wheel post 76 after installation.

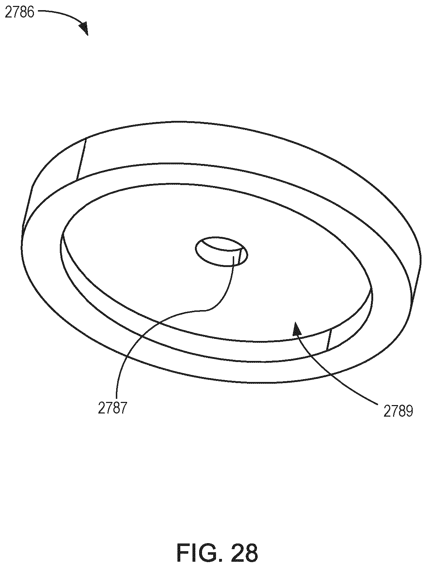

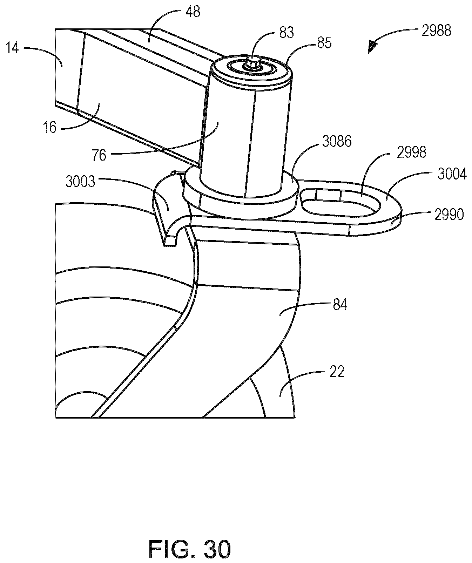

As shown in FIG. 30, a final embodiment of the forward bracket assembly 2988 is shown. This embodiment is the same as the embodiment shown in FIG. 28, but the spacer 3086 is arranged upward of the forward bracket body 2990 on the wheel post 76. The forward bracket body 2990 also includes a lip 3003 that curls around the upward surface of the wheel connector 84 to prevent rotation of the forward bracket body 2890 about the wheel post 76. The lip 3003 extends from an end of the forward bracket body 2990 in a direction that opposes the connecting aperture 2998. The lip 3003 prevents rotation of the forward bracket body 2990 about the wheel post 76. Regardless of how the connecting aperture 2998 is arranged relative to the forward bracket body 2990 and/or the wheel assembly 74, the inclusion of the lip 3003 ensures that the connecting aperture 2998 is located in specific position when the forward bracket assembly 2988 is secured in place.

While specific embodiments of the device of the present disclosure have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the device of the present disclosure which is to be given the full breadth of the claims appended and any and all equivalents thereof.

## Claims

1. A bracket assembly (88, 128) for a work vehicle (10) configured for securing the work vehicle (10) to an anchor structure via a connecting apparatus, the bracket assembly (88, 128) comprising:
a bracket body (90, 130) defining a first mounting aperture (94, 132), a second mounting aperture (96, 134), and a connecting aperture (98, 136); and
an attachment fastener (83, 146) configured to secure the bracket body (90, 130) to the vehicle (10),
wherein the first mounting aperture (94, 132) is configured to receive a first end of the attachment fastener (83, 146) therein and the second mounting aperture (96, 134) is configured to receive a second end of the attachment fastener (83, 146) therein,
wherein the attachment fastener (36, 146) extends from the first mounting aperture (94, 132) to the second mounting aperture (96, 134) to define a mounting space with the bracket body (90, 130), the mounting space being configured to fit about a bracket mounting portion of the work vehicle (10), thereby securing the bracket assembly (88, 128) to the work vehicle (10), and
wherein the connecting aperture (98, 136) is configured to engage with the connecting apparatus.

2. The bracket assembly (88, 128) of claim 1, wherein the bracket body (90, 130) further defines an alignment aperture (100) configured to receive a wheel post (76) of the work vehicle (10) therein.

3. The bracket assembly (88, 128) of claim 2, wherein the alignment aperture (100) is configured to share an axis with the wheel post (76).

4. The bracket assembly (88, 128) of claim 2 or 3, wherein the alignment aperture (100) is disposed at least partially forward of the first mounting aperture (94), the second mounting aperture (96), and the connecting aperture (98) relative to the work vehicle (10).

5. The bracket assembly (88, 128) of any one of claims 1 to 4, wherein the attachment fastener (83, 146) is U-shaped and extends around the bracket mounting portion of the work vehicle (10).

6. The bracket assembly (88, 128) of any one of claims 1 to 5, wherein the attachment fastener (83, 146) further comprises a first locking nut (150) and a second locking nut (152), the first locking nut (150) and the second locking nut (152) being configured to secure, respectively, the first end and the second end of the attachment fastener (83, 146) to the bracket body (90, 130).

7. The bracket assembly (88, 128) of any one of claims 1 to 6, wherein the first mounting aperture (94, 132) is disposed inward of the second mounting aperture (96, 134) and the connecting aperture (98, 136) relative to the work vehicle (10).

8. The bracket assembly (88, 128) of any one of claims 1 to 7, wherein the connecting apparatus is a rope, a strap, or a chain configured to be received within the connecting aperture (98, 136) and tied to the bracket body (90, 130).

9. The bracket assembly (88, 128) of any one of claims 1 to 8, wherein the connecting aperture (98, 136) is disposed outside of the first mounting aperture (94, 132) and the second mounting aperture (96, 134) relative to the work vehicle (10).

10. A tie-down bracket system for securing a work vehicle (10) to an anchor structure, the tie-down bracket system comprising:
at least one forward bracket assembly (88) comprising:
a forward bracket body (90) defining a first forward mounting aperture (94), a second forward mounting aperture (96), and at least one forward connecting aperture (98); and
a forward attachment fastener (83) configured to secure the forward bracket body (90) to the work vehicle; and
at least one rear bracket assembly (128) comprising:
a rear bracket body (130) defining at least one rear mounting aperture (132, 134) and at least one rear connecting aperture (136, 138); and
at least one rear attachment fastener (146, 148) configured to be received within the at least one rear mounting aperture (132, 134) to secure the rear bracket body (130) to the work vehicle (10),
wherein the first forward mounting aperture (94) is configured to receive a first end of the forward attachment fastener (83) therein and the second forward mounting aperture (96) is configured to receive a second end of the forward attachment fastener (83) therein,
wherein the forward attachment fastener (83) extends from the first forward mounting aperture (94) to the second forward mounting aperture (96) to define a mounting space with the forward bracket body (90), the mounting space being configured to fit about a bracket mounting portion of the work vehicle (10), thereby securing the at least one forward bracket assembly (88) to the work vehicle (10),
wherein the at least one forward connecting aperture (98) is configured to engage with at least one first connecting apparatus, and
wherein the at least one rear connecting aperture (136, 138) is configured to engage with at least one second connecting apparatus.

11. The tie-down bracket system of claim 10, wherein the at least one forward bracket body (90) further defines an alignment aperture (100) configured to receive a wheel post of the work vehicle (10) therein.

12. The tie-down bracket system of claim 10 or 11, wherein the at least one forward connecting aperture (98) is disposed outside of the first forward mounting aperture (94) and the second forward mounting aperture (96) relative to the work vehicle (10).

13. The tie-down bracket system of any one of claims 10 to 12, wherein the at least one first connecting apparatus is a rope, a strap, or a chain configured to be received within the forward connecting aperture (94) and tied to the forward bracket body (90).

14. The tie-down bracket system of claim 13, wherein the at least one forward bracket assembly (88) comprises a plurality of forward bracket assemblies corresponding to a number of forward wheels on the work vehicle (10), and
wherein the at least one first connecting apparatus comprises a plurality of connecting apparatuses corresponding to the plurality of forward bracket assemblies (88).

15. The tie-down bracket system of any one of claims 10 to 14, wherein the at least one rear mounting aperture (132, 134) is configured to be aligned with at least one cut-out defined in the work vehicle (10), the at least one rear mounting aperture (132, 134) and the at least one cut-out being configured to receive the at least one rear attachment fastener (146, 148) therethrough to secure the at least one rear bracket to the work vehicle (10).

16. The tie-down bracket system of any one of claims 10 to 15, wherein the at least one second connecting apparatus is a rope, a strap, or a chain configured to be received within the at least one rear connecting aperture and tied to the rear bracket body.

17. The tie-down bracket system of claim 16, wherein the at least one rear connecting aperture comprises a first rear connecting aperture (136) and a second rear connecting aperture (138), and
wherein the at least one second connecting apparatus comprises a first rope and a second rope configured to be received within, respectively, the first rear connecting aperture (136) and the second rear connecting aperture (138) and tied to the rear bracket body (130).

18. A work vehicle (10) comprising:
a body (12);
a right wheel assembly (74) connected to the body (12);
a left wheel assembly (74) connected to the body (12);
a first forward bracket assembly (88) detachably mounted to the right wheel assembly (74); and
a second forward bracket assembly (88) detachably mounted to the left wheel assembly (74),
wherein the right and left wheel assemblies (74) each comprise:
a leg (106) extending from the body (12);
a post (76) extending from the leg; and
a wheel (20) operatively connected to the post,
wherein the first and second forward bracket assemblies (74) each comprise:
a forward bracket body (90) defining a first forward mounting aperture (94), a second forward mounting aperture (96), and a forward connecting aperture (98); and
a forward attachment fastener (83) having a first end and a second end,
wherein the first forward mounting aperture (94) is configured to receive the first ends of the forward attachment fasteners (83) therein and the second forward mounting aperture (96) is configured to receive the second ends of the forward attachment fasteners (83) therein,
wherein the forward attachment fasteners (83) are configured to extend from the first forward mounting apertures (94) around the legs of the right and left wheel assemblies (74) to the second forward mounting apertures (96), thereby mounting the first and second forward bracket assemblies (88) to the right and left wheel assemblies (74), and
wherein the forward connecting apertures (98) is configured to receive at least one first connecting apparatus therethough to connect the at least one first connecting apparatus to the forward bracket bodies (90).

19. The work vehicle (10) of claim 18, wherein the forward bracket bodies (90) of the first and second bracket assemblies (88) both further define a forward alignment apparatus (100), wherein the alignment apparatuses are configured to receive the posts of the right and left wheel assemblies (74) therein.

20. The work vehicle (10) of claim 18 or 19 further comprising:
a rear bracket assembly (128) detachably mounted to the body (12), the rear bracket assembly (128) comprising:
a rear bracket body (130) defining a first rear mounting aperture (132), a second rear mounting aperture (134), and at least one rear connecting aperture (136, 138);
a first rear attachment fastener (146); and
a second rear attachment fastener (148),
wherein the first rear mounting aperture (132) and the second rear mounting aperture (134) are configured to be aligned with, respectively, a first vehicle mounting aperture (94) and a second vehicle mounting aperture (96) defined in the body (12) of the work vehicle (10),
wherein the first rear mounting aperture (132) and the first vehicle mounting aperture (94) are configured to receive the first rear attachment fastener therethrough, and the second rear mounting aperture (134) and the second vehicle mounting aperture (96) are configured to receive the second rear attachment fastener therethrough, thereby mounting the rear bracket (128) assembly to the body (12), and
wherein the at least one rear connecting aperture (136, 138) is configured to receive at least one second connecting apparatus therethrough, thereby securing the at least one second connecting apparatus to the rear bracket body (130).
